# EUROPEAN PATENT APPLICATION

(11) **EP 2 224 162 A1**
(43) Date of publication of application: **01.09.2010**
(21) Application number: 09010509.9
(22) Date of filing: 14.08.2009
(51) Int. Cl.: F21S 9/03, F21V 33/00

(54) **Light emitting device with a solar bulb**

(30) Priority: 26.02.2009 US 394014
(71) Applicant: Miniwiz S.E.D. Co., Ltd., Xinyi District Taipei City (TW)
(72) Inventor: Liu, Tzu-Wei, Taichung City (TW); Huang, Chian-Chi, Taipei City (TW); Huang, Min-Feng, Taipei City (TW)
(74) Representative: Weber, Joachim

(57) **Abstract**

A light emitting device (100) is disclosed. The light emitting device (100) includes a bottle (102), and a solar bulb (104) for capping with the bottle (102). The solar bulb (104) includes a housing (106), a solar panel (112) disposed on the housing (106) for converting solar energy into electric energy, a rechargeable battery module (114) installed inside the housing (106) for storing the electric energy generated by the solar panel (112), a light source (116) installed inside the housing (106) for emitting light to the bottle (102), and a control circuit (118) installed inside the housing (106) and coupled to the solar panel (112) and the rechargeable battery module (114) for transmitting the electric energy from the rechargeable battery module (114) to the light source (116).

## Description

The present invention relates to a light emitting device according to the pre-characterizing clause of claim 1.

In general, a chemical battery can transfer chemical energy into electric energy. The chemical battery includes advantages of portability, high energy density, no noise, and so on, so the chemical battery is widely used in a notebook computer, and portable electronic apparatus, such as mobile phones and digital cameras. There are two kinds of the chemical battery, a non-rechargeable battery and a rechargeable battery. The non-rechargeable battery only can be used once, and chemical energy can not be supplied by charging the battery. The non-rechargeable batteries are a dry battery, a mercury battery, an alkaline battery, and so on. The rechargeable battery can be used repeatedly, and chemical energy can be supplied by charging the battery. The rechargeable batteries are a lead-acid battery, a NiMH battery, a lithium battery, an advanced lithium battery, and so on. However, when the non-rechargeable battery and the rechargeable battery run out of electricity, the non-rechargeable battery and the rechargeable battery can not provide electricity anymore at the moment, causing inconvenient to operate electronic apparatuses. In addition, the chemical battery has disadvantages of difficulty of recycling, pollution, and low charging speed.

With improvement of battery technology and due to increasing awareness of environmental protection issues, many charging devices for recharging electronic products with clean energy are manufactured accordingly, such as a solar charger, a hand-powered device, and so forth. The solar charger involves utilizing a solar panel to absorb solar energy so as to convert the solar energy into electric energy. The hand-powered device involves utilizing a motor that may convert mechanical energy into electric energy, meaning that a user may rotate a drive shaft of the motor to make electromagnetic induction occur in the motor to generate the electric energy. However, for a hand-powered device, a user needs to provide mechanical energy so that the motor may be driven to generate electric energy, such as shaking the hand-powered device or rotating the drive shaft of the hand-powered device. Thus, it is time and energy consuming to use the hand-powered device to charge electronic products. Besides, charging efficiency of a hand-powered device is not as good as that of a solar charger. Hence, there is a need to apply solar conversion modules for environmental design of electronic products.

This in mind, the present invention aims at providing a light emitting device with a solar bulb capable of converting solar energy into electric energy for lightening.

This is achieved by a light emitting device according to claim 1. The dependent claims pertain to corresponding further developments and improvements.

As will be seen more clearly from the detailed description following below, the claimed light emitting device includes a bottle, and a solar bulb for capping with the bottle. The solar bulb includes a housing, a solar panel disposed on the housing for converting solar energy into electric energy, a rechargeable battery module installed inside the housing for storing the electric energy generated by the solar panel, a light source installed inside the housing for emitting light to the bottle, and a control circuit installed inside the housing and coupled to the solar panel and the rechargeable battery module for transmitting the electric energy from the rechargeable battery module to the light source.

In the following, the invention is further illustrated by way of example, taking reference to the accompanying drawings. Thereof
FIG.1 is a perspective drawing of a light emitting device according to a preferred embodiment of the present invention,
FIG.2 to FIG.4 are perspective drawings at different views of a solar bulb according to the preferred embodiment of the present invention,
FIG.5 is a diagram illustrating inner components of the solar bulb according to the preferred embodiment of the present invention, and
FIG.6 to FIG.8 are diagrams illustrating a casing rotating relative to a base in different degrees of freedom according to the preferred embodiment of the present invention.

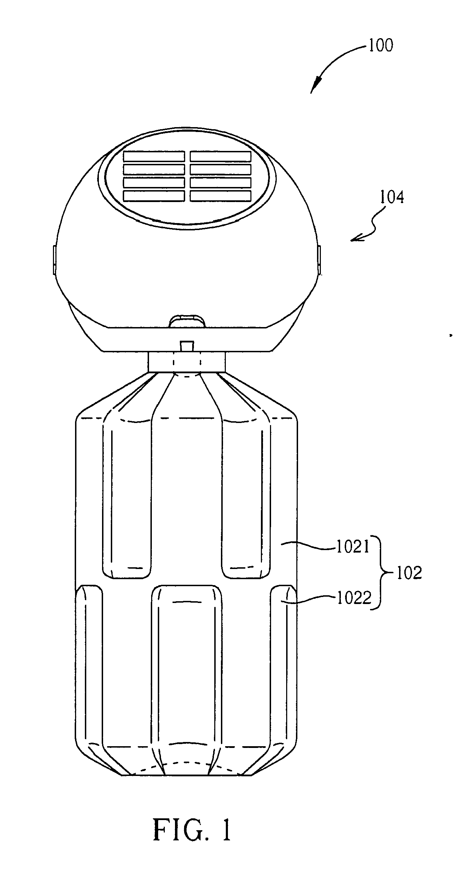

Please refer to FIG.1. FIG.1 is a perspective drawing of a light emitting device 100 according to a preferred embodiment of the present invention. The light emitting device 100 includes a bottle 102, and a solar bulb 104 capped with the bottle 102. The solar bulb 104 can be screwed on the bottle 102 as a bottle cap. Fluid, such as water, can be contained inside the bottle 102. The bottle 102 includes alternate a plurality of protruding parts 1021 and a plurality of sunken parts 1022. The disposition and the amount of the plurality of protruding parts 1021 and the plurality of sunken parts 1022 are not limited to this embodiment and can be designed upon actual demand. The bottle 102 also can include a smooth surface instead.

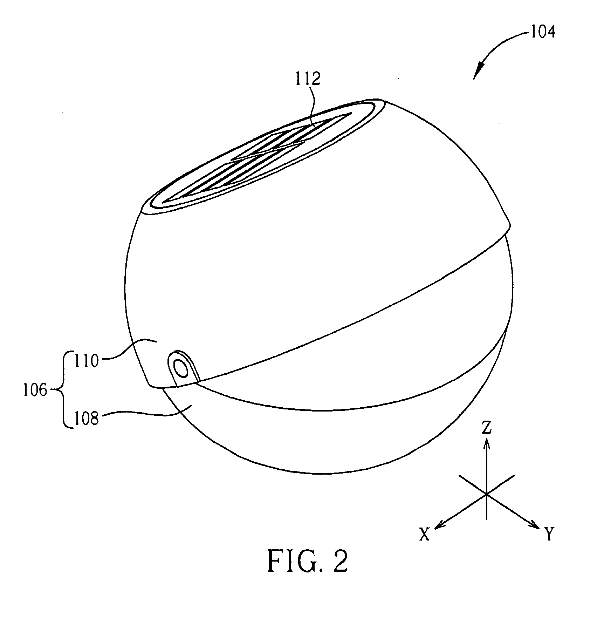

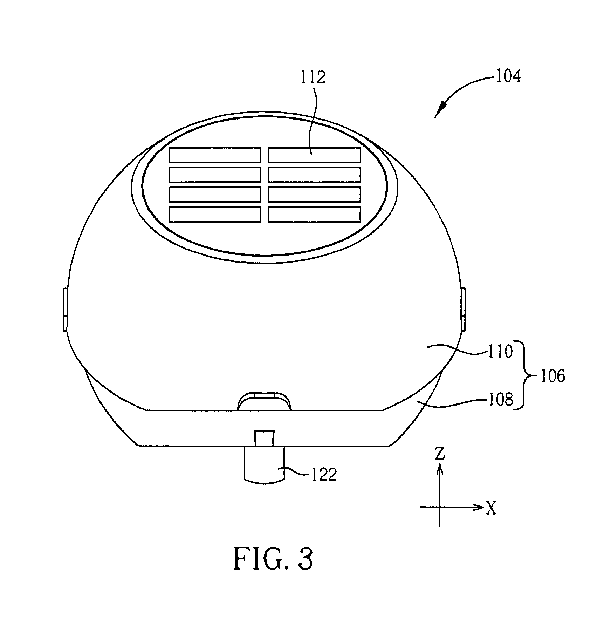

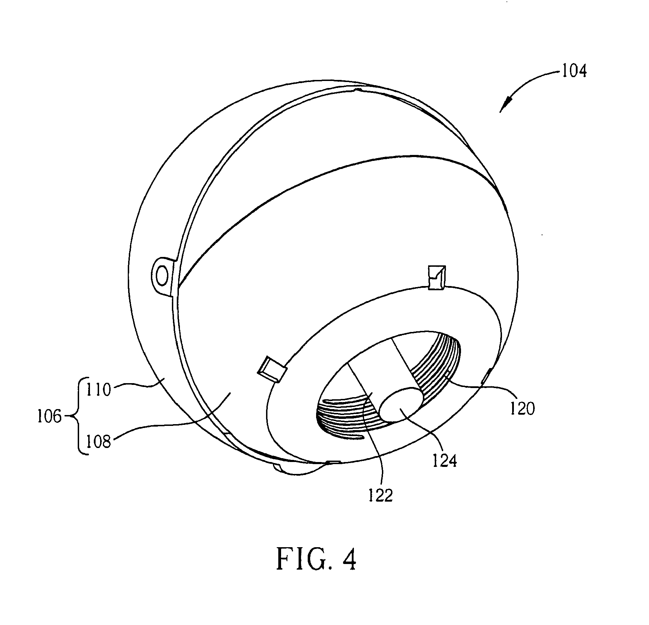

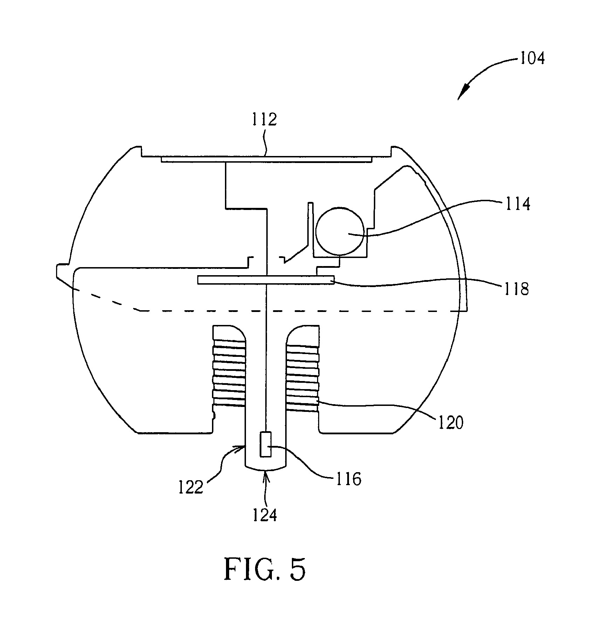

Please refer to FIG.2 to FIG.5. FIG.2 to FIG.4 are perspective drawings at different views of the solar bulb 104 according to the preferred embodiment of the present invention. FIG.5 is a diagram illustrating inner components of the solar bulb 104 according to the preferred embodiment of the present invention. The solar bulb 104 includes a housing 106. The housing 106 includes a base 108 and a casing 110 connected to the base 108 in a rotatable manner. The casing 110 and the base 108 can be hemispheric structures substantially. The solar bulb 104 further includes a solar panel 112 disposed on the casing 110 of the housing 106 for converting solar energy into electric energy. The solar bulb 104 further includes a rechargeable battery module 114 installed inside the housing 106 for storing the electric energy generated by the solar panel 112.

The solar bulb 104 further includes a light source 116 installed inside the housing 106 for emitting light to the bottle 102. The light source 116 can be a light emitting diode (LED), a laser diode, a lamp, and combination thereof. The solar bulb 104 further includes a control circuit 118 installed inside the housing 106 and coupled to the solar panel 112 and the rechargeable battery module 114 for transmitting the electric energy from the rechargeable battery module 114 to the light source 116. The control circuit 118 can be formed on a circuit board, such as a printed circuit board. A thread 120 is formed on an inner surface of the housing 106 of the solar bulb 104 for screwing the bottle 102 so that the solar bulb 104 is a bottle cap for capping the bottle 102. The base 108 of the housing 106 includes a lance structure 122 for inserting into a mouth of the bottle 102, and the light source 116 is disposed inside the lance structure 122 so that the light source 116 is inserted into the bottle 102 when the bottle 102 is capped with the solar bulb 104. A light magnifying unit 124 is disposed on an end of the lance structure 122 and on an optical path of the light emitting to the bottle 102 from the light source 116. The light magnifying unit 124 is utilized for magnifying the light emitted from the light source 116. The light magnifying unit 124 can be a lens structure formed on the end of the solar bulb 104. Please refer to FIG.1 and FIG.5, the plurality of protruding parts 1021 and the plurality of sunken parts 1022 of the bottle 102 and the fluid contained inside the bottle 102 can refract the light emitted from the light source 116 to cause to glitter.

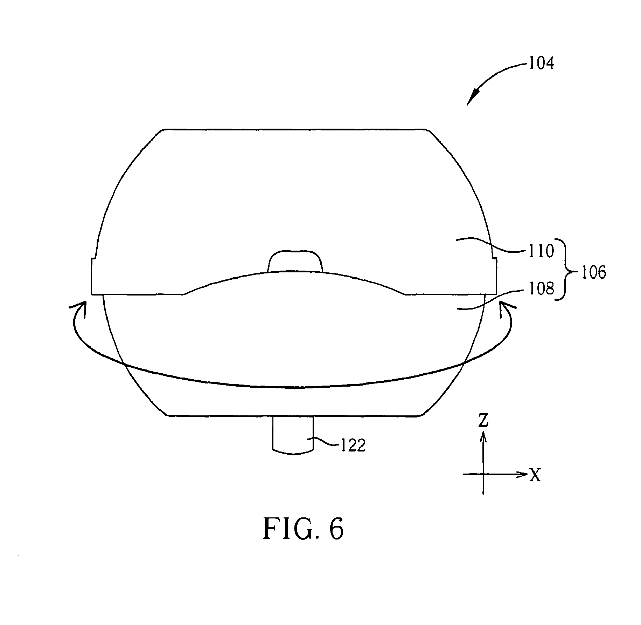

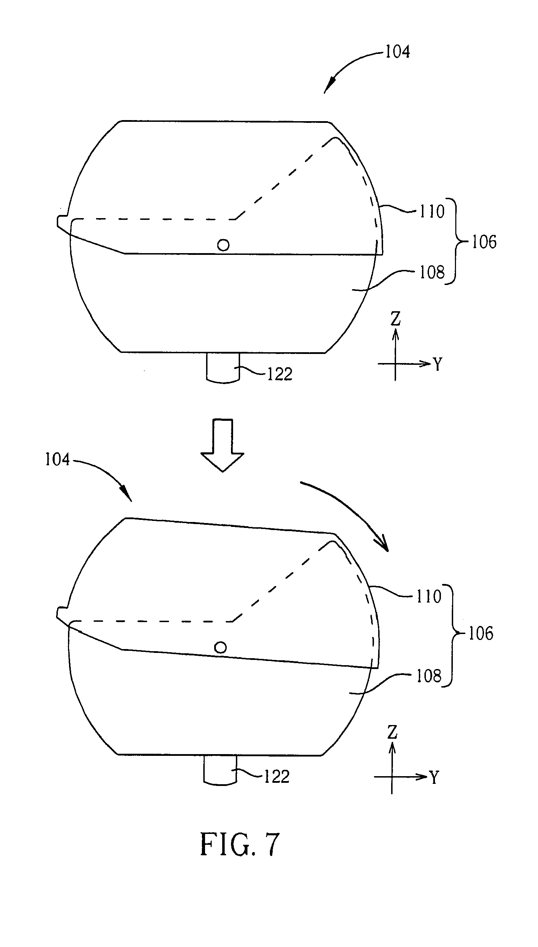

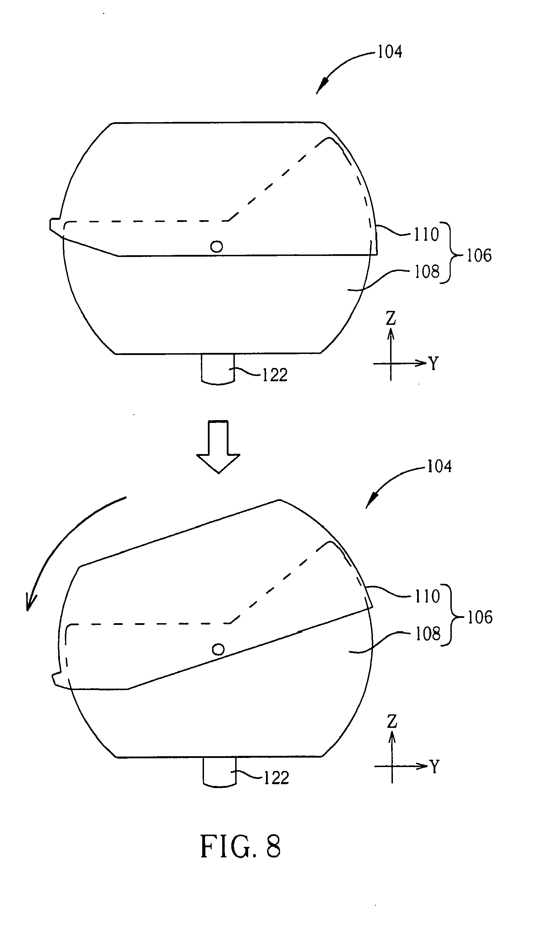

Please refer to FIG.6 to FIG.8. FIG.6 to FIG.8 are diagrams illustrating the casing 110 rotating relative to the base 108 in different degrees of freedom according to the preferred embodiment of the present invention. As shown in FIG.6, the casing 110 is connected to the base 108 in a rotatable manner around the Z-axis direction. That is, the casing 110 is swivelable relative to the base 108 at 360 degrees. As shown in FIG.7 and FIG.8, the casing 110 is connected to the base 108 in a rotatable manner on the Y-Z plane clockwise and counterclockwise (around the X-axis direction) respectively. That is, the casing 110 is swingable relative to the base 108. Because the casing 110 has multiple rotational degrees of freedom, the solar panel 112 disposed on the casing 110 can be rotated to orient the sun so as to increase solar energy conversion efficiency. The rotary mechanism of the casing 100 is not limited to this embodiment and can be designed upon actual demand.

In contrast to the prior art, the light emitting device of the present invention includes the solar bulb capable of converting solar energy into electric energy for lightening. The present invention provides an environmental design of illumination devices.

## Claims

1. A light emitting device (100) comprising:
a bottle (102); and
**characterized by**:
a solar bulb (104) for capping with the bottle (102), the solar bulb (104) comprising:
a housing (106);
a solar panel (112) disposed on the housing (106) for converting solar energy into electric energy;
a rechargeable battery module (114) installed inside the housing (106) for storing the electric energy generated by the solar panel (112);
a light source (116) installed inside the housing (106) for emitting light to the bottle (102); and
a control circuit (118) installed inside the housing (106) and coupled to the solar panel (112) and the rechargeable battery module (114) for transmitting the electric energy from the rechargeable battery (114) module to the light source (116).

2. The light emitting device of claim 1, **characterized by** fluid contained inside the bottle (102) for refracting the light emitted from the light source (116).

3. The light emitting device of claim 2, **characterized in that** the fluid is water.

4. The light emitting device of one of claims 1 to 3, **characterized in that** the bottle (102) comprises alternate a plurality of protruding parts (1021) and a plurality of sunken parts (1022).

5. The light emitting device of one of claims 1 to 4, **characterized in that** a thread (120) is formed on an inner surface of the housing (106) of the solar bulb (104) for screwing the bottle (102).

6. The light emitting device of one of claims 1 to 5, **characterized in that** the solar bulb (104) further comprises a light magnifying unit (124) for magnifying the light emitted from the light source (116).

7. The light emitting device one of of claim 1 to 6, **characterized in that** the housing (106) comprises a lance structure (122) for inserting into a mouth of the bottle (102).

8. The light emitting device of claim 7, **characterized in that** the light source (116) is disposed inside the lance structure (122).

9. The light emitting device of claim 7 or 8, **characterized in that** the solar bulb (104) further comprises a light magnifying unit (124) disposed on an end of the lance structure (122) for magnifying the light emitted from the light source (116).

10. The light emitting device of claim 1, **characterized in that** the housing (106) comprises:
a base (108); and
a casing (110) connected to the base (108) in a rotatable manner.

11. The light emitting device of claim 10, **characterized in that** the casing (110) is swingable relative to the base (108).

12. The light emitting device of claim 10 or 11, **characterized in that** the casing (110) and the base (108) are hemispheric structures substantially.

13. The light emitting device of one of claims 10 to 12, **characterized in that** the base (108) comprises a lance structure (122) for inserting into a mouth of the bottle (102) and the light source (116) is disposed inside the lance structure (12).

14. The light emitting device of one of claims 10 to 13, **characterized in that** the solar panel (112) is disposed on the casing (110).

15. The light emitting device of one of claims 1 to 14, **characterized in that** the light source (116) is selected from a group consisting of a light emitting diode (LED), a laser diode, a lamp, and combination thereof.
